# EUROPEAN PATENT SPECIFICATION

(11) **EP 0 771 100 B1**
(45) Date of publication and mention of the grant of the patent: **03.03.2004**
(21) Application number: 96117108.9
(22) Date of filing: 24.10.1996
(51) Int. Cl.: H04M 1/274, H04M 15/18

(54) **Telephone terminal with a card type automatic dialling device**
Telefonendgerät mit einer kartenförmigen automatischen Wähleinrichtung
Terminal téléphonique avec un dispositif de numérotation automatique sous forme de carte

(30) Priority: 27.10.1995 JP 30224995; 27.10.1995 JP 30225095
(43) Date of publication of application: 02.05.1997
(73) Proprietor: Kokusai Denshin Denwa Kabushiki Kaisha, Tokyo 163-03 (JP)
(72) Inventor: Kouyama, Takeshi, Tokyo 163-03 (JP); Takehora, Takashi, Tokyo 163-03 (JP); Oikawa, Hideyuki, Tokyo 163-03 (JP)
(74) Representative: Ritter und Edler von Fischern, Bernhard, Dipl.-Ing.

(56) References cited:
- EP-A- 0 574 006
- US-A- 4 879 744
- US-A- 5 305 374
- BOLTJES C J: "FACILITIES FOR USERS OF SOPHO-SET FEATURE PHONES" PHILIPS TELECOMMUNICATION REVIEW,NL,PHILIPS TELECOMMUNICATIE INDUSTRIE N.V. HILVERSUM, vol. 48, no. 1, 1 March 1990 (1990-03-01), pages 20-27, XP000116333
- PATENT ABSTRACTS OF JAPAN vol. 018, no. 305 (E-1559), 10 June 1994 (1994-06-10) & JP 06 062153 A (HITACHI COMMUN SYST INC), 4 March 1994 (1994-03-04)
- PATENT ABSTRACTS OF JAPAN vol. 015, no. 394 (E-1119), 7 October 1991 (1991-10-07) & JP 03 159347 A (MATSUSHITA ELECTRIC IND CO LTD), 9 July 1991 (1991-07-09)
- PATENT ABSTRACTS OF JAPAN vol. 014, no. 308 (E-0947), 3 July 1990 (1990-07-03) & JP 02 098263 A (CANON INC), 10 April 1990 (1990-04-10)

## Description

The present invention relates to a telephone terminal provided with a card reader for a card memory medium, comprising a means for registering a telephone number entered through the dial keys of a front panel into the card memory medium; a means for automatically reading and dialing the telephone number registered in the card memory medium; a means for counting down the units of call credit according to a charge list for an opposite party during the call; a display means mounted on the front panel for displaying at least a command to register the telephone number. Such a terminal is disclosed in US 4879744.

Reference is also made to EP-O-574,006, in which there is described an IC card terminal apparatus wherein a reading device determines from an inserted card the language of the user, and then selectively displays menu options in the language determined by the IC card, regardless of the location of the phone itself. It is considered that the language information for a plurality of languages, and a plurality of set messages, may be stored within the system, even that there be a separate memory location for each of the set languages. Rather than read the language code from the IC card each time, the data may be stored in a location within the system for the time the card remains inserted.

### Description of the Related Art

A variety of telephone communications systems have been developed which allow a caller to call any desired party through a telephone line without manually dialing the party's number. One of them is a voice dialing system comprising accessing the voice dialing service of a local station by depressing dialing buttons or scanning a card, in which the dialing number of the service is recorded, with a card reader on the telephone terminal, and upon the voice dialing service being connected, speaking the name of the party registered with the local station to cause the local station to dial the number of the party automatically.

One prior art is disclosed in Japanese Patent Laid-open Publication 6-216983 (1994) as in the form of an advance booking system in which an IC card is used for accessing the booking center when inserted into an IC card terminal connected to public telephone lines and booking e.g. train or airplane seats in advance. As stipulated, the IC card is rewritable and if the dialing number of the booking center terminal is changed, the existing number recorded at issuing and saved in the IC card is replaced with a new number by connecting the IC card terminal connected to the public telephone lines to rewrite the IC card, without reclaiming the IC card for rewriting or reissuing the IC card. More specifically, when a predetermined number is inputted by the user through the IC card terminal for replacing the existing number displayed on a display of the IC card terminal, the updated dialing number of the booking center terminal is saved in the IC card.

However, a voice dialing service of the prescribed type requires the local station for providing at least a voice recognition device and a table for assigning the names to be announced by callers to their respective telephone numbers of full digits. This causes the facility of the local station to be increased or enhanced.

The advance booking system of the latter capable of updating the dialing number of the service center terminal is also disadvantageous in that although the IC card is enabled to access the service center for booking, it is not allowed for connecting communications with other parties. The advance booking system fails to take a positive measurement when the IC card is nearly exhausted with its units of call credit determined by a prepaid amount of money being decreased below a reference level and its available length of call time is critical.

According to a first aspect of the present invention there is provided a telephone terminal as initially defined, characterized by a means for storing in the card memory medium, when the call credit units are counted down, at least either language display data of a language used on the display means or data relating to a volume control of speech.

According to a second aspect of the present invention there is provided a telephone terminal provided with a card reader, and having a function of automatically writing data in a card inserted into the card reader, comprising:
a means for examining whether or not the calling time determined by the remaining call credit of the card inserted in the card reader is less than a predetermined reference time duration;
a means for displaying, a message requesting the insertion of a new card when the calling time determined by the remaining call credit of the current card is less than the predetermined reference time duration;
a means for temporarily saving relevant card data recorded in the current card inserted in the card reader when the insertion of the new card is requested; and
a means for transferring the relevant card data recorded in the current card to the new card upon the current card being replaced with the new card.

According to one embodiment, the telephone terminal comprises a means for registering a telephone number entered through the dial keys of a front panel into a card in which units of call credit are saved, a means for automatically reading and dialing the telephone number registered in the card, a means for counting down the units of call credit according to a charge list for an opposite party during the call, and a display means mounted on the front panel for displaying at least a registering order for the telephone number.

According to another embodiment when the card is inserted into the card reader, the entry of automatic dialing starts calling a target party. As the connection to the party is made, the call credit units are counted down during the call. The telephone terminal provided with the foregoing means can thus perform the automatic dialing action without the use of any extra facility at the local station. Also, the card allows the call to start automatically and the charge for the call to be paid.

According to a further embodiment, a telephone terminal provided with a card reader and having a function of automatically writing data in to a card inserted into the card reader comprises a means for examining whether or not the calling time determined by the remaining value of call credit of the card inserted in the card reader is less than a predetermined reference length, a means for displaying a message of demanding the insertion of a new card when the calling time determined by the remaining call credit of the current card is less than the predetermined reference length, a means for temporarily saving relevant card data recorded in the current card inserted in the card reader when the insertion of the new card is demanded, and a means for transferring the relevant card data recorded in the current card to the new card upon the current card being replaced with the new card.

In action, the new card upon the insertion is automatically loaded with the relevant card data saved in the current card and will highly be user friendly.

With embodiments of the invention to be described, it is possible to automatically dial a desired party with loading no excess on a switching system. The telephone terminal to be described are capable of automatically dialing a desired party with the use of a card memory medium and provided with a card reader for automatically writing the contents of the existing card into a new card.

For a better understanding of the invention, and to show how the same may be carried into effect, reference will now be made, by way of example, to the accompanying drawings in which:-
Fig. 1 is a block diagram of a circuitry arrangement according to one embodiment of described herein;
Fig. 2 is a front view of a telephone terminal of the embodiment showing its front panel;
Fig. 3 is a schematic diagram showing a storage assignment on a card;
Fig. 4 is a flowchart of a primary procedure according to the present embodiment;
Fig. 5 is a flowchart of a series of steps branched from the procedure of Fig. 4;
Fig. 6 is a flowchart of a series of steps following the steps of Fig. 5;
Fig. 7 is a flowchart of a series of steps following the steps of Fig. 6; and
Fig. 8 is a flowchart of a series of steps following the steps of Fig. 7.

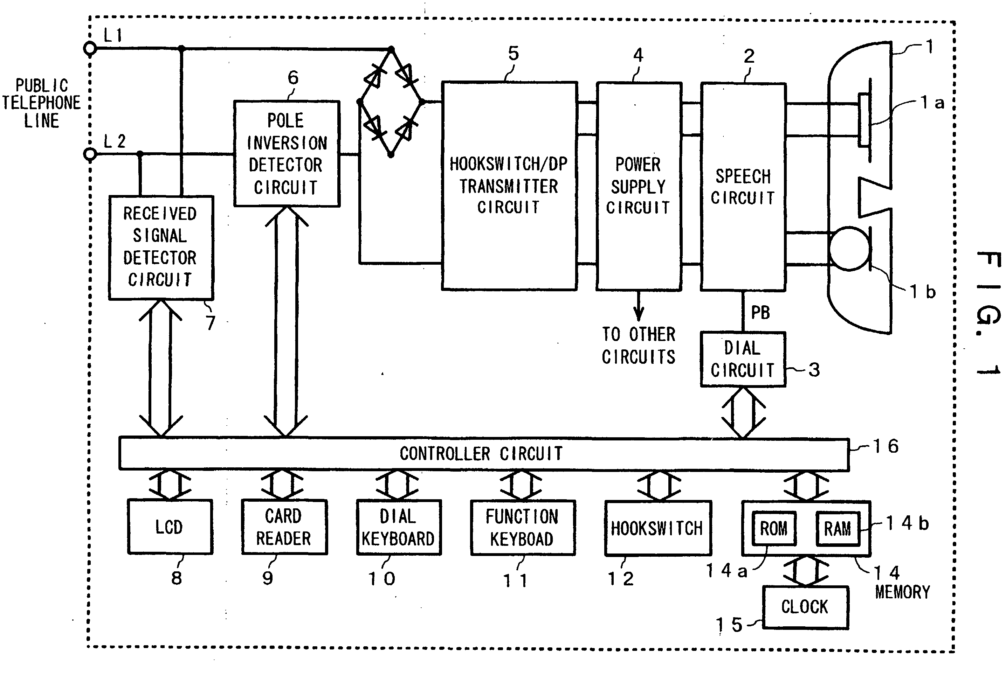

Embodiments of the present invention will be described in more detail referring to the accompanying drawings. Fig. 1 is a block diagram showing the circuitry arrangement of a telephone terminal of the present invention.

The telephone terminal includes, as shown, a hand set 1 comprising a receiver 1 a and a transmitter (a microphone) 1b, a speech circuit 2, a dial circuit 3 for PB signal, a power supply circuit 4, a hookswitch/DP transmitter circuit 5, a pole inversion detector circuit 6, a received signal detector circuit 7, and terminals L1 and L2 connected to a public telephone line. The above arrangement is well known and will be explained in no more details. In addition, the telephone terminal includes a liquid crystal display (LCD) 8, a card reader 9, a dial keyboard 10, a function keyboard 11, a hookswitch 12, a memory 14 comprising a ROM 14a and a RAM 14b, a clock 15, and a controller circuit 16 for controlling actions of the prescribed components.

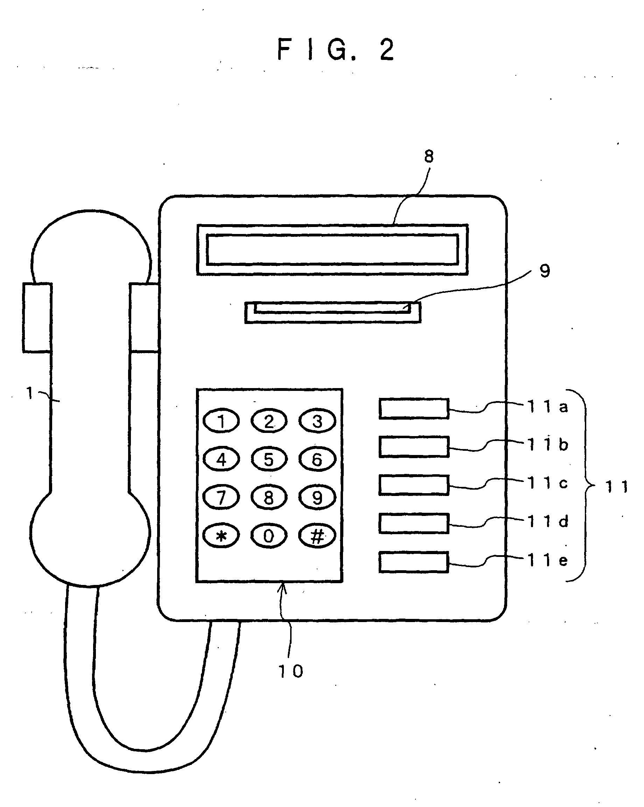

Fig. 2 is a front view showing schematically a front panel of the telephone terminal. As shown, the function keyboard 11 is mounted on the front panel comprising a re-dial buttonswitch 11a, a follow-on buttonswitch 11b, a language selector buttonswitch 11c, a volume controller buttonswitch 11d, and a card exchange buttonswitch 11e. The other numerals represent their respective components shown in Fig. 1. The language selector buttonswitch 11c of this embodiment is adapted for, but not limited to, selection from six different languages: English, French, German, Spanish, Portuguese, and Japanese. The volume controller buttonswitch 11d has but is not limited to a range of control from 0 to 9 dB.

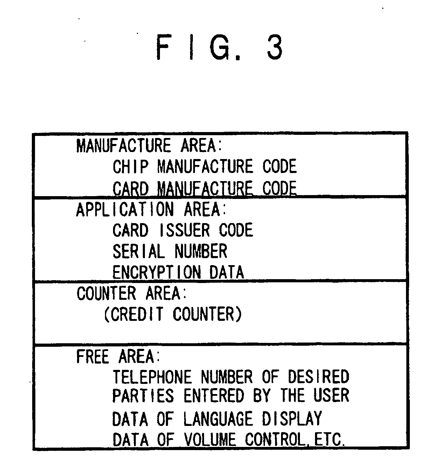

Fig. 3 is a diagram showing a storage assignment in a card (e.g. an IC card) used with the card reader 9. The card has a storage region which comprises four memory areas: a manufacturer area, an application area, a counter area, and a free area. The manufacturer area saves a chip manufacturer code and a card manufacturer code. The application area holds a card issuer code, a serial number, and encryption data. Any one can purchase the card, which has a number of the call credit units corresponding to a prepaid sum of money, from its issuer. The counter area saves data of the call credit and the free area holds the telephone numbers of desired parties entered by the user, data of language display, data of volume control, etc. For ease of description of the embodiment, the IC card saves but not limited to the telephone number of one party. The IC card is not of limitative and a magnetic card or the like may be used with equal success.

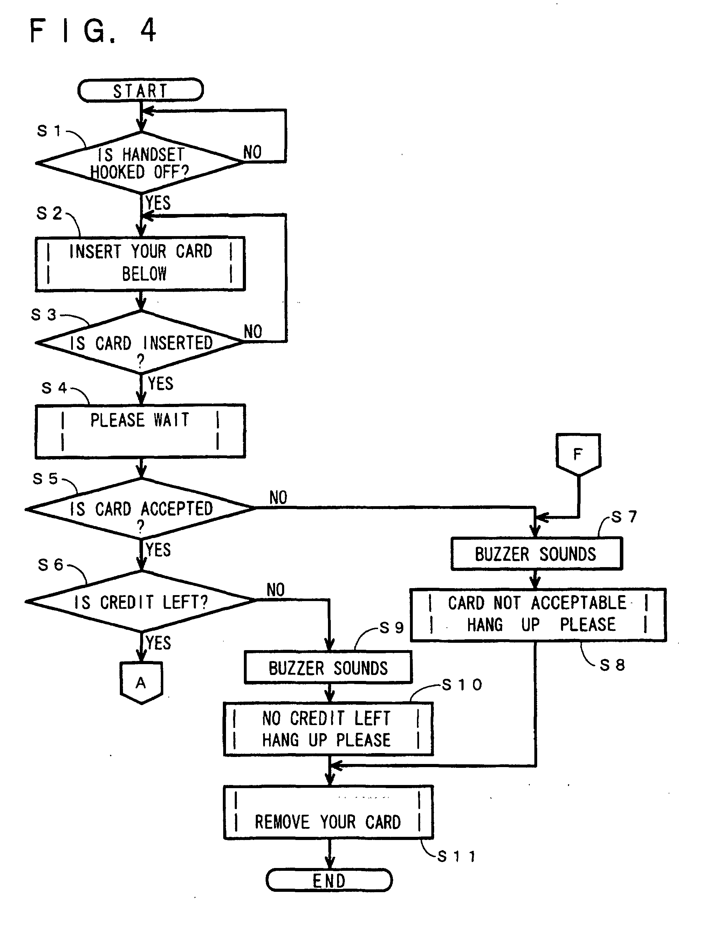

The action of the embodiment will be explained referring to Figs. 4 to 8. The action is carried out by the controller circuit 16 using a control program stored in the memory 14. The controller circuit 16 handles control data supplied through the IC card reader 9, dial keyboard 10, function keyboard 11, and hookswitch 12 or causes the LCD display 8 to visually indicate display data from the memory 14. A primary procedure carried out by the controller circuit 16 will be described with the displayed data on the LCD display 8 below.

The procedure starts with examining whether or not the hand set 1 of the telephone terminal is hooked off (Step S1). When Step S1 gives yes, the procedure goes to Step S2 where an English message, INSERT YOUR CARD BELOW, is displayed on the LCD display 8. It is then examined at Step S3 whether or not a card is loaded into the card reader 9. When yes, the procedure moves to Step S4 where "PLEASE WAIT" in English appears.

This is followed by Step S5 where it is examined whether the loaded card is accepted or not. When accepted, it is examined at Step S6 whether the call credit units for a prepaid amount are available or not. If it is determined at Step S5 that the loaded card is not accepted, the procedure goes to Step S7 where a buzzer sound is emitted for warning card remaining. Then, Step S8 provides the display of an English message indicating that the loaded card is not acceptable and the hand set should be hooked on. If it is determined at Step S6 that no unit of the call credit is left in the card, the procedure moves to Step S9 for emitting a buzzer sound and Step S10 for providing an English message stating that no call credit is left and the hand set should be hanged up. Then, Step S11 gives a message of unloading the card. Although English messages are used in the embodiment, any other language may be used.

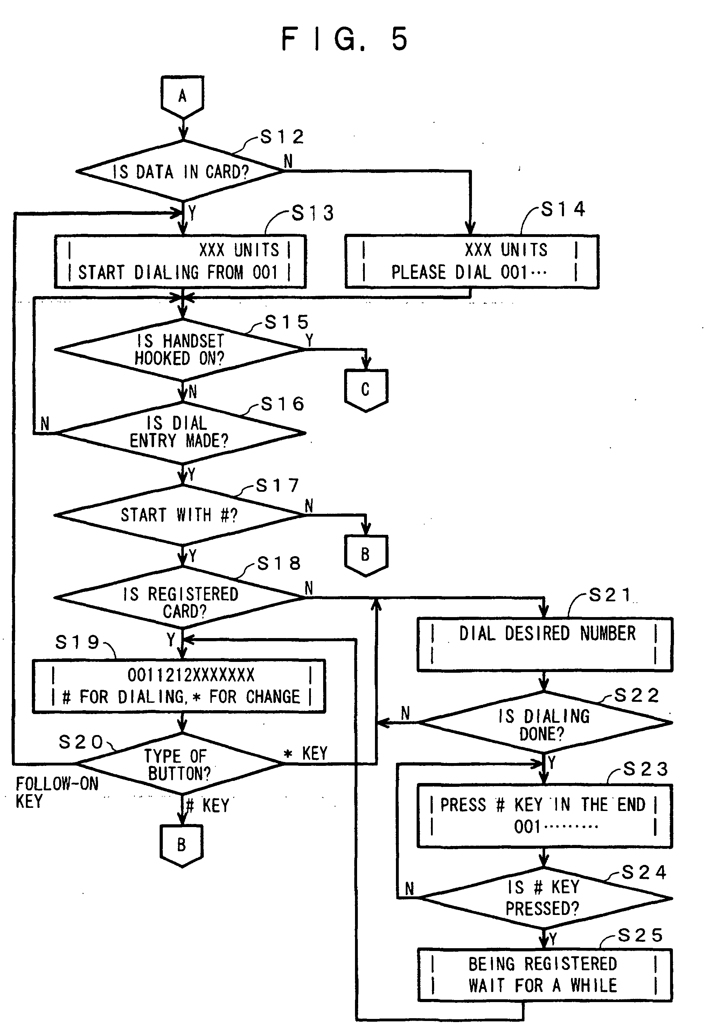

Upon the procedure arriving at Step S12 shown in Fig. 5, it is examined whether or not the card holds relevant data including the telephone number of parties to be communicated with, the language display, and the volume control. When yes, the procedure goes to Step S13. If the relevant data of the language display is in French, French messages are displayed indicating "xxx units" and "start dialing from 001". So does in German or Japanese if the relevant data to the language display is in German or Japanese. xxx means a number corresponding to the remaining units of the call credit. If Step S12 gives no, the procedure goes to Step S14 where the display in English is selected because the relevant data of the language display is not specified.

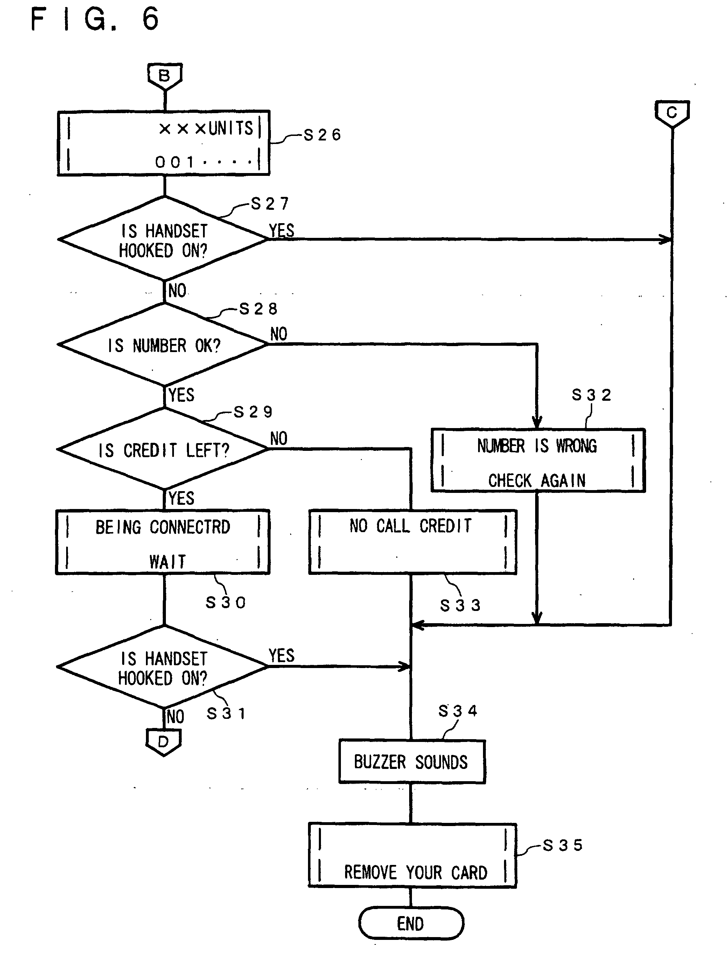

It is then examined at Step S15 whether the hand set is hooked on or not. When not, the procedure moves to Step S16. If yes, the procedure advances to Step S34 shown in Fig. 6. It is examined at Step S16 whether or not the dial entry is made by the user. When the entry is made, the procedure goes to Step S17 where it is examined whether or not the entry is started with # key. If so, a set of succeeding steps starting from Step S18 follow for registering or replacing with new telephone numbers, and carrying out an automatic dialing action.

At Step S18, it is examined whether the loaded card is a registered card or not. When yes, the procedure moves to Step S19 where the registered telephone number "0011212xxxxxxx" and a message "# for dialing, * for change" are displayed in French, German, or Japanese. The succeeding messages are displayed in a selected language determined by the language display in the card and the display in relation to the language display on the LCD display 8 will be no more explained. In this embodiment, the language used for display may be French, German, or Japanese.

At Step S20, it is examined whether the actuated buttonswitch is of #, *, or follow-on. If # button is pressed, the procedure goes to Step S26 shown in Fig. 6 for automatic dialing. If * button is activated, the procedure moves to Step S21 where a message "Dial desired number" is displayed. When Step S18 indicates no, i.e. the load card is an unregistered card, the procedure moves to Step S21.

At Step S22, it is examined whether the dialing has been done or not. When yes, a message "Press # key in the end" is displayed at Step S23 together with the telephone number entered at Step S21. It is then examined at Step S24 whether # button has been pressed or not. When yes, the procedure goes to Step S25 for displaying "Being registered and wait for a while". This means that when new and not registered, the card is loaded with the telephone number of a desired party or when registered, its data of the telephone number is replaced with the desired telephone number. The follow-on button also has a function of canceling and when it is depressed at Step S20, the procedure returns back to Step S13.

If the numerals key from 0 to 9 other than # button are activated in the beginning at Step S17, the procedure goes to Step S26 shown in Fig. 6 where the dialing is accepted. When # key is selected at Step S20, Step S26 provides an automatic dialing action. At Step S26, the remaining units of the call credit and the dialing number entered manually or read out from the card are displayed. At Step S27, it is examined whether or not the hand set 1 is hooked on. If not, the procedure goes to Step S28, it is examined whether the telephone number displayed is qualified or not. This is done by identifying the header number, for example, 001 for an international call via KDD from Japan, and verifying the international ID and local station numbers.

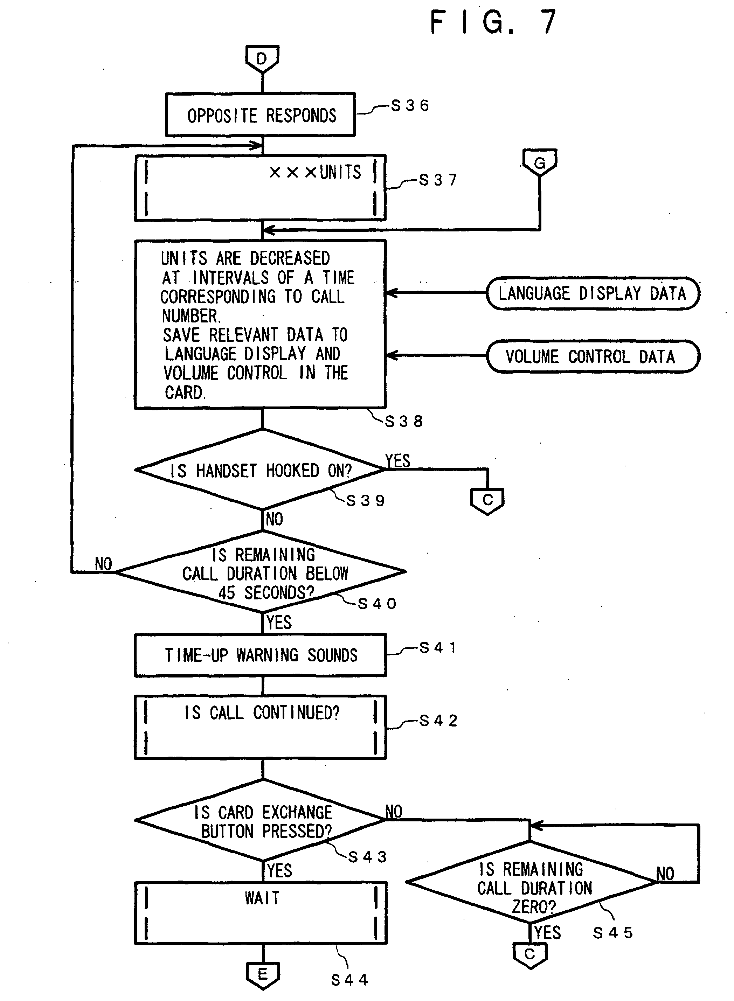

When it is judged that the telephone number conforms to the rules, the procedure goes to Step S29 where it is examined whether the call credit is left available. When yes, a message "Being connected and wait" is displayed at Step S30. The procedure then moves to Step S31 where it is examined whether the hand set is hooked on or not. If not, the procedure advances to Step S36 shown in Fig. 7 for continuing the call. If Step S28 or S29 judges no, the procedure goes to Steps S32 or S33 respectively where a message "Number is wrong and check again" or "No call credit". At Step S34, a buzzer sound is emitted for warning card remaining and a message "Remove your card" is displayed at Step S35.

As the procedure goes to Step S36 shown in Fig. 7, a response from the opposite party is made to start a talk. The remaining units of the call credit are displayed at Step S37. The call credit units are consumed by given intervals of time determined according to the called number. When the call credit units are counted down, data of the language display and the volume control determined through the language selector 11c and volume control 11d buttonswitches (Fig. 2) are saved in the card. It is then examined at Step S39 whether the hand set is hooked on or not. If not, the procedure goes to Step S40 for examining whether or not the remaining of the call credit is less than 45 seconds. When not, the procedure moves back to Step S37 for continuing the call. If it is judged yes at Step S40, the procedure goes to Step S41 where a warning sound is emitted indicating that the time is up. The limit of time is not limited to 45 seconds at Step S40.

At Step S42, a message "Is call continued?" is displayed. This is followed by Step S43 where it is examined whether the card exchange button switch 11 e is depressed or not. When the button switch is depressed, a message "Wait" is displayed at Step S44. If Step S43 judges no, the procedure goes to Step S45 where it is examined whether the remaining time of the call credit is zero or not. If so, the steps after S34 follow.

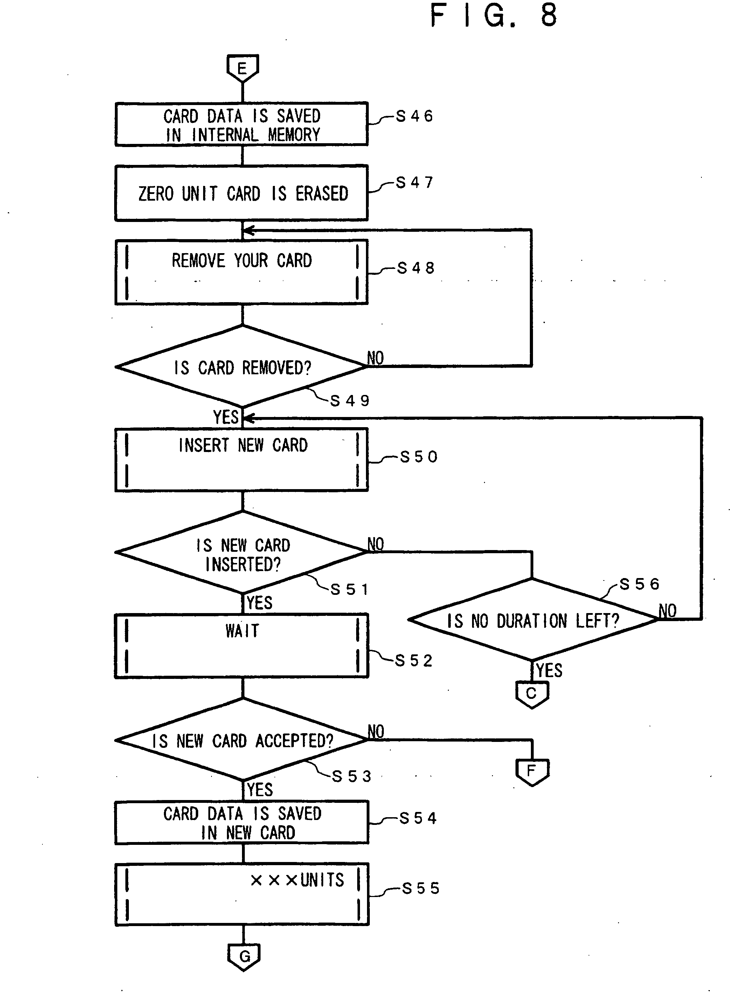

When the procedure goes to Step S46 shown in Fig. 8, the card data including the telephone numbers of parties to be called, the language display, and the volume control are temporarily saved in the internal memory or RAM 14b (Fig. 1) of the telephone terminal. This is followed by Step S47 where the card of which call credit is zero is completely erased for security. At Step S48, a message "Remove your card" is displayed. When the card has been removed at Step S49, Step S50 indicates "Insert new card". After it is judged at Step S51 that a new card is loaded, a message "Wait" is displayed at Step S52. It is then examined at Step S53 whether the new card is accepted or not. When yes, the procedure goes to Step S54 for writing the card data saved in the internal memory onto the new card. As the call credit of the new card has been displayed at Step S55, the procedure returns back to Step S38 for continuing the call.

If no card is loaded within a given length of time at Step S51, it is judged yes at Step S56 and the procedure after Steps S34 and S35 is terminated. When Step S53 judges that the new card is not accepted, the steps identical to S7, S8, and S11 follow. Those steps are conducted as displayed in French, German or Japanese but not English.

As set forth above, the embodiment enables to display or emit a warning indication that the time is up, when the remaining of the call time determined by the call credit is decreased below a reference length, allowing the user to replace the previous card with a new card for continuing the call. Upon the new card is inserted into the telephone terminal, it is automatically loaded with the relevant data saved in the previous card and will thus be user friendly.

The telephone terminals described above permit a telephone card to be provided in which units of the call credit determined by a prepaid amount of money are saved to be inserted into and scanned by its card reader so that the telephone number of any desired party to be called is registered and read out upon request and the call credit units are automatically counted down as consumed, hence providing automatic dialing actions with no need of any extra facility added to the existing local station. Also, the consumed card is easily replaced with a new card which in tum is automatically loaded with relevant data saved in the consumed card. The new card will be used by the same user as of the consumed card without difficulty nor discrepancy. The consumed card when having been replaced by the new card is completely erased for security and will be discarded without exposing the relevant data.

It will be appreciated that the telephone terminals described above, such as a public telephone set, are capable of using an automatic dialing function to call and communicate with a desired party without the use of an extra facility at a local station while eliminating the prescribed problems of the prior art. Furthermore, with the telephone terminals described, which are for use with a card saving units of call credit, it is possible for the telephone numbers of desired parties to be registered in the card so that any of the parties can be called without manually dialing its number and the charge for calling is borne by a caller. Furthermore, the telephone terminals may allow the card to be replaced by a new one without interrupting the call when the calling duration determined by units of call credit saved in the card is less than a reference length. Still further, the telephone terminals may have a function of automatically writing desired data into a new card loaded in its card reader.

## Claims

1. A telephone terminal provided with a card reader for a card memory medium, comprising:
a means for registering a telephone number entered through the dial keys (10) of a front panel into the card memory medium;
a means for automatically reading (9) and dialing the telephone number registered in the card memory medium;
a means for counting down (S38) the units of call credit according to a charge list for an opposite party during the call;
a display means mounted on the front panel for displaying at least a command to register the telephone number;
**characterized by**:
a means for storing (S38) in the card memory medium, when the call credit units are counted down, at least either language display data of a language used on the display means or data relating to a volume control of speech.

2. A telephone terminal according to claim 1,
wherein the telephone terminal includes a language display data instructing means (S38) for determining a language used on the display means.

3. A telephone terminal according to claim 1,
wherein the telephone terminal includes a volume controller means (11d) for controlling the volume of speech.

4. A telephone terminal according to Claim 1,
wherein the terminal is adapted such that, when a call is made with the card memory medium, the display means (8) displays messages in the language stored in the card memory medium.

5. A telephone terminal provided with a card reader (9), and having a function of automatically writing data in a card inserted into the card reader, comprising:
a means (S46) for examining whether or not the calling time determined by the remaining call credit of the card inserted in the card reader is less than a predetermined reference time duration;
a means for displaying (8), a message requesting the insertion of a new card when the calling time determined by the remaining call credit of the current card is less than the predetermined reference time duration;
a means (S46) for temporarily saving relevant card data recorded in the current card inserted in the card reader when the insertion of the new card is requested; and
a means (S54) for transferring the relevant card data recorded in the current card to the new card upon the current card being replaced with the new card.

6. A telephone terminal according to claim 5,
wherein the relevant card data includes at least the telephone number of a party to be called.

7. A telephone terminal according to claim 5,
wherein when the current card is replaced with the new card, its relevant card data in the current card is completely erased.

8. A telephone terminal according to claim 5,
wherein during the replacement of the current card with the new card in the card reader, the connection to a party being called is maintained.

## Patentansprüche

1. Telefonendgerät, das mit einem Kartenleser für ein Kartenspeichermedium versehen ist, umfassend:
eine Einrichtung zum Registrieren einer Telefonnummer, die über die Wähltasten (10) einer Frontplatte in das Kartenspeichermedium eingegeben werden;
eine Einrichtung zum automatischen Lesen (9) und Wählen der Telefonnummer, die in dem Kartenspeichermedium registriert ist;
eine Einrichtung zum Herabzählen (S38) der Einheiten eines Anrufguthabens gemäß einer Gebührenliste für eine Gegenpartei während des Anrufs;
eine Anzeigeeinrichtung, die an der Frontplatte angebracht ist, um zumindest einen Befehl, die Telefonnummer zu registrieren, anzuzeigen;
**gekennzeichnet durch**:
eine Einrichtung zum Speichern (S38), in dem Kartenspeichermedium, wenn die Anrufguthaben-Einheiten herabgezählt werden, von zumindest entweder Sprachanzeigedaten einer verwendeten Sprache auf der Anzeigeeinrichtung oder von Daten, die eine Sprach-Lautstärkesteuerung betreffen.

2. Telefonendgerät nach Anspruch 1, wobei das Telefonendgerät eine Sprachanzeigedaten-Instruktionseinrichtung (S38) einschließt, um eine auf der Anzeigeeinrichtung verwendete Sprache zu bestimmen.

3. Telefonendgerät nach Anspruch 1, wobei das Telefonendgerät eine Lautstärke-Steuereinrichtung (11d) einschließt, um die Sprach-Lautstärke zu steuern.

4. Telefonendgerät nach Anspruch 1, wobei das Endgerät derart ausgelegt ist, dass, wenn ein Anruf mit dem Kartenspeichermedium ausgeführt wird, die Anzeigeeinrichtung (8) Nachrichten in der Sprache anzeigt, die in dem Kartenspeichermedium gespeichert ist.

5. Telefonendgerät, das mit einem Kartenleser (9) versehen ist und eine Funktion eines automatischen Schreibens von Daten in eine Karte, die in den Kartenleser eingeführt ist, aufweist, umfassend:
eine Einrichtung (S46) zum Überprüfen, ob die Anrufzeit, die durch das verbleibende Anrufguthaben der Karte, die in den Kartenleser eingeführt ist, bestimmt wird, geringer als eine vorbestimmte Referenzzeitdauer ist oder nicht;
eine Einrichtung zum Anzeigen (8) einer Nachricht, die die Einführung einer neuen Karte anfordert, wenn die Anrufzeit, die durch das verbleibende Anrufguthaben der gegenwärtigen Karte bestimmt ist, geringer als die vorbestimmte Referenzzeitdauer ist;
eine Einrichtung (S46) zum vorübergehenden Speichern relevanter Kartendaten, die in der gegenwärtigen Karte, die in den Kartenleser eingeführt ist, aufgezeichnet sind, wenn die Einführung der neuen Karte angefordert wird; und
eine Einrichtung (S54) zum Übertragen der relevanten Kartendaten, die in der gegenwärtigen Karte aufgezeichnet sind, auf die neue Karte, nachdem die gegenwärtige Karte durch die neue Karte ersetzt worden ist.

6. Telefonendgerät nach Anspruch 5, wobei die relevanten Kartendaten zumindest die Telefonnummer einer anzurufenden Partei einschließen.

7. Telefonendgerät nach Anspruch 5, wobei, wenn die gegenwärtige Karte durch die neue Karte ersetzt wird, ihre relevanten Kartendaten in der gegenwärtigen Karte vollständig gelöscht werden.

8. Telefonendgerät nach Anspruch 5, wobei während des Ersatzes der gegenwärtigen Karte durch die neue Karte in dem Kartenleser die Verbindung zu einer angerufenen Partei aufrechterhalten wird.

## Revendications

1. Terminal téléphonique équipé d'un lecteur de carte pour un support de mémoire à carte, comprenant :
un moyen pour enregistrer dans le support de mémoire à carte un numéro de téléphone introduit par les touches (10) du clavier d'un panneau avant ;
un moyen pour lire (9) et former automatiquement le numéro de téléphone enregistré dans le support de mémoire à carte ;
un moyen pour décompter (S38) les unités de crédit d'appel en fonction d'une liste de prix pour un correspondant, pendant l'appel ;
un moyen d'affichage monté sur le panneau avant, pour afficher au moins une commande pour enregistrer le numéro de téléphone ;
**caractérisé par** :
un moyen pour stocker (S38) dans le support de mémoire à carte, lorsque les unités de crédit d'appel sont décomptées, au moins, soit des données d'affichage de la langue d'une langue utilisée sur le moyen d'affichage, soit des données relative à une commande de volume de la voix.

2. Terminal téléphonique selon la revendication 1, dans lequel le terminal téléphonique comprend un moyen (S38) d'instruction pour les données d'affichage de la langue, pour déterminer une langue utilisée sur le moyen d'affichage.

3. Terminal téléphonique selon la revendication 1, dans lequel le terminal téléphonique comprend un moyen (11d) de commande du volume, pour commander le volume de la voix.

4. Terminal téléphonique selon la revendication 1, dans lequel le terminal est adapté de sorte que, lorsqu'un appel est effectué avec le support de mémoire à carte, le moyen d'affichage (8) affiche des messages dans la langue stockée dans le support de mémoire à carte.

5. Terminal téléphonique équipé d'un lecteur de carte (9), et disposant d'une fonction permettant d'écrire automatiquement des données dans une carte insérée dans le lecteur de carte, comprenant :
un moyen (S46) pour examiner si le temps d'appel déterminé par le crédit d'appel restant de la carte insérée dans le lecteur de carte est ou non inférieur à une durée de temps de référence prédéterminée ;
un moyen pour afficher (8) un message demandant l'insertion d'une nouvelle carte lorsque le temps d'appel déterminé par le crédit d'appel restant de la carte en cours est inférieur à la durée de temps de référence prédéterminée ;
un moyen (S46) pour sauvegarder temporairement des données utiles de la carte, enregistrées dans la carte en cours insérée dans le lecteur de carte, lorsque l'insertion de la nouvelle carte est demandée ; et
un moyen (S54) pour transférer vers la nouvelle carte, les données utiles de la carte enregistrées dans la carte en cours, lorsque la carte en cours est remplacée par la nouvelle carte.

6. Terminal téléphonique selon la revendication 5, dans lequel les données utiles de la carte comprennent au moins le numéro de téléphone d'un correspondant à appeler.

7. Terminal téléphonique selon la revendication 5 dans lequel, lorsque la carte en cours est remplacée par la nouvelle carte, ses données de carte utiles dans la carte en cours sont complètement effacées.

8. Terminal téléphonique selon la revendication 5 dans lequel, pendant le remplacement de la carte en cours par la nouvelle carte dans le lecteur de carte, la connexion à un correspondant appelé est maintenue.
